(19) Europäisches Patentamt
European Patent Office
Office européen des brevets

(11) **EP 3 122 805 B1**

(12) **EUROPEAN PATENT SPECIFICATION**

(45) Date of publication and mention
of the grant of the patent:
**08.07.2020  Bulletin 2020/28**

(51) Int Cl.:
***C08J 7/04*** *(2020.01)*     ***H05B 6/76*** *(2006.01)*

(21) Application number: **15715852.8**

(22) Date of filing: **24.03.2015**

(86) International application number:
**PCT/IB2015/052157**

(87) International publication number:
**WO 2015/145355 (01.10.2015 Gazette 2015/39)**

(54) **TRANSPARENT ARTICLES INCLUDING ELECTROMAGNETIC RADIATION SHIELDING**

TRANSPARENTE ARTIKEL MIT ABSCHIRMUNG GEGEN ELEKTROMAGNETISCHE STRAHLUNG

ARTICLES TRANSPARENTS CONTENANT UNE PROTECTION CONTRE LE RAYONNEMENT ÉLECTROMAGNÉTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.03.2014  US 201461969645 P**

(43) Date of publication of application:
**01.02.2017  Bulletin 2017/05**

(73) Proprietor: **SABIC Global Technologies B.V.
4612 PX Bergen op Zoom (NL)**

(72) Inventors:
  • **JUNG, JinJu**
    **SungNam**
    **461-824 (KR)**
  • **KIM, SungHun**
    **SungNam**
    **461-824 (KR)**
  • **YAMAMOTO, Takamune**
    **Moka**
    **321-4392 (JP)**
  • **BANG, Taehoon**
    **Gyeonggi-do**
    **461-824 (KR)**
  • **CHOI, Jongmin**
    **Gyeonggi-do**
    **461-824 (KR)**
  • **KRISHNAN, Chandarasekaran**
    **Singapore, 760386 (SG)**

(74) Representative: **Balder IP Law, S.L.
Paseo de la Castellana 93
5ª planta
28046 Madrid (ES)**

(56) References cited:
  **WO-A2-01/65903          FR-A1- 2 976 651
  JP-A- H06 272 870        US-A1- 2004 234 752
  US-A1- 2007 120 100      US-B2- 7 601 406**

  • **BERTOLOTTI M ET AL: "Nanotechnology of transparent metals for radio frequency electromagnetic shielding", IEEE TRANSACTIONS ON ELECTROMAGNETIC COMPATIBILITY, IEEE SERVICE CENTER, NEW YORK, NY, US, vol. 45, no. 4, 1 November 2003 (2003-11-01), pages 586-594, XP011103551, ISSN: 0018-9375, DOI: 10.1109/TEMC.2003.819057**

## Description

BACKGROUND

Microwave oven door viewing panels made of glass panes can require electromagnetic interference (EMI) shielding to limit EMI from transmission outside the oven cavity to meet industry and/or governmental regulations. Metal can be a good EMI shielding material. A viewing panel can incorporate a metal sheet to limit transmission of EMI through the panel. The metal sheet can be perforated which can improve visibility through the panel while maintaining the shielding functionality.

A perforated metal sheet incorporated into a viewing panel of a microwave oven door can effectively limit transmission of microwaves through the viewing panel and can meet industry and/or governmental standards for microwave transmission. However, in addition to limiting microwave transmission, a perforated metal sheet can limit transmission of light visible to the human eye, e.g., EMI having a frequency of 430 terahertz (THz) to 790 THz, or wavelengths in air of 390 nanometer (nm) to 700 nm. As a result, a viewing panel having a perforated metal sheet can obscure the image of a food item placed inside a microwave oven cavity which can be undesirable to consumers. Thus, there can be a trade-off between visibility (visible light transmittance through the panel) and microwave shielding. Larger perforations can render the microwave shielding unsatisfactory, while small perforations can reduce visibility. As a result, consumers can be left with panels that obscure the image of food within the oven cavity.

Additionally, a perforated metal sheet can increase the weight of a microwave oven door assembly. In order to support a heavier door, a stronger hinge can be used, which can further increase the weight and cost of the microwave oven. Furthermore, viewing panels having a perforated metal sheet and a glass pane can be limited to flat construction due at least in part to relatively high cost associated with forming each component into alternative shape and assembling them together. Thus, incorporating such construction into a microwave oven can limit design freedom.

Thus, there is a need in the art for a microwave oven viewing panel having increased visible light transmittance, sufficient microwave shielding capability to meet relevant national and industry standards for microwave emission, and that is capable of reducing the weight and cost of the panel, and can provide greater design freedom allowing for improved aesthetics and curved designs.

BRIEF DESCRIPTION

A method of forming a viewing panel for a microwave oven can comprise: placing a film including a conductive coating into a mold and molding a substrate to a surface of the film having the conductive coating to form the viewing panel; or injection molding a substrate and applying a conductive coating to a surface of the substrate after molding to form the viewing panel; wherein the substrate is selected from a transparent polymer or glass; the conductive coating has an EMI shielding effectiveness of greater than 25 dB from 30 MHz to 3.0 GHz as determined by ASTM D4935; and the viewing panel has a transmittance of greater than or equal to 50% of incident light having a frequency of 430 THz to 790 THz.

A method of forming a viewing panel for a microwave oven can comprise: coupling a film including a conductive coating to a substrate to form a panel preform; and thermoforming or vacuum forming the panel preform to form the viewing panel; wherein the substrate is selected from a transparent polymer or glass; the coating has a surface resistance of less than or equal to 1.0 ohm/sq; and the viewing panel has a transmittance of greater than or equal to 50% of incident light having a frequency of 430 THz to 790 THz.

A viewing panel for a microwave oven can comprise: a substrate comprising a transparent polymer or glass; a conductive coating adjacent to a surface of the substrate; wherein the coating includes conductive nanoparticles selected from conductive nanoparticles, conductive metal nanowire, carbon allotropes, or a combination comprising at least one of the foregoing, wherein the conductive nanoparticles are nanometer sized metal particles arranged in a network; the viewing panel has a transmittance of greater than or equal to 50% of incident light having a frequency of 430 THz to 790 THz; and the viewing panel has an EMI shielding effectiveness of greater than 25 dB from 30 MHz to 3.0 GHz as determined by ASTM D4935.

The above described and other features are exemplified by the following figures and detailed description.

BRIEF DESCRIPTION OF THE DRAWINGS

Refer now to the figures, which are exemplary embodiments, and wherein the like elements are numbered alike.

FIG. 1 is an illustration of a cross-sectional view of a viewing panel having a substrate and a conductive coating.
FIG. 2 is an illustration of a cross-sectional view of a viewing panel having a substrate, a film, and a conductive coating.
FIG. 3 is an illustration of a cross-sectional view of a portion of a viewing panel having a substrate, a film, a conductive coating, and a protective material.

FIG. 4 is an illustration of a cross-sectional view of a portion of a viewing panel having a substrate and conductive coating.

FIG. 5 is an illustration of a viewing panel.

FIG. 6 is a graphical illustration of a radiation emission test conducted on various samples measuring the power density.

FIG. 7 is an illustration of a microwave oven door with a viewing panel as described herein.

DETAILED DESCRIPTION

A microwave oven can cook food items placed within an oven cavity by subjecting them to microwaves, e.g., electromagnetic interference (EMI) having a frequency of 300 gigahertz (GHz) to 300 megahertz (MHz). A magnetron, or similar device, for converting electrical energy into EMI, can feed the microwaves into the oven cavity. A metal plate, or metal coated surfaces, can be disposed along the walls of the microwave oven cavity and can confine the microwaves within the oven cavity. A door for accessing the oven cavity can be disposed on a wall of the oven. A viewing panel (e.g., a window) can be disposed on the door of the oven and can allow a user to view food as it is cooked within the microwave oven cavity. Microwave transmission from the surfaces of a microwave oven can be regulated by industry, international, and/or governmental codes and standards (e.g. 21CFR1030.10 revised April 1, 2013, International Special Committee on Radio Interference (CISPR) 11, CISPR 19, Federal Communications Commission (FCC) part 18, European Standard EN55011, and similar standards). A lighter weight microwave oven viewing panel including a transparent substrate, e.g., a transparent polymeric substrate or a transparent glass substrate, and a conductive coating where the viewing panel has increased visible light transmittance as compared to a microwave oven viewing panel made of glass and a metal sheet for EMI shielding is disclosed. The viewing panel also has sufficient microwave shielding capability (i.e., EMI shielding in the microwave frequency) to meet relevant national and industry standards for microwave emission and can provide greater design freedom allowing for improved aesthetics and curved designs. The conductive coating can be disposed adjacent to a surface of the substrate. The conductive coating can be coupled directly to a surface of the substrate. The conductive coating can be coupled to the surface of a polymer film coupled to a surface of the substrate.

A conductive coating, e.g., a transparent conductive coating, can provide light weight, high transparency, and efficient microwave blocking when included on or in a microwave oven viewing panel (e.g., microwave oven window). For example, the coating can have a transmittance of visible light of greater than 50%, for example, greater than 60%, for example, greater than 70%. The conductive coating can be continuously conductive. The conductive coating can have a sheet resistance of less than 50 Ohms per square ($\Omega$/sq), for example, less than 25 $\Omega$/sq, for example, less than 10 $\Omega$/sq, for example, less than 1 $\Omega$/sq.

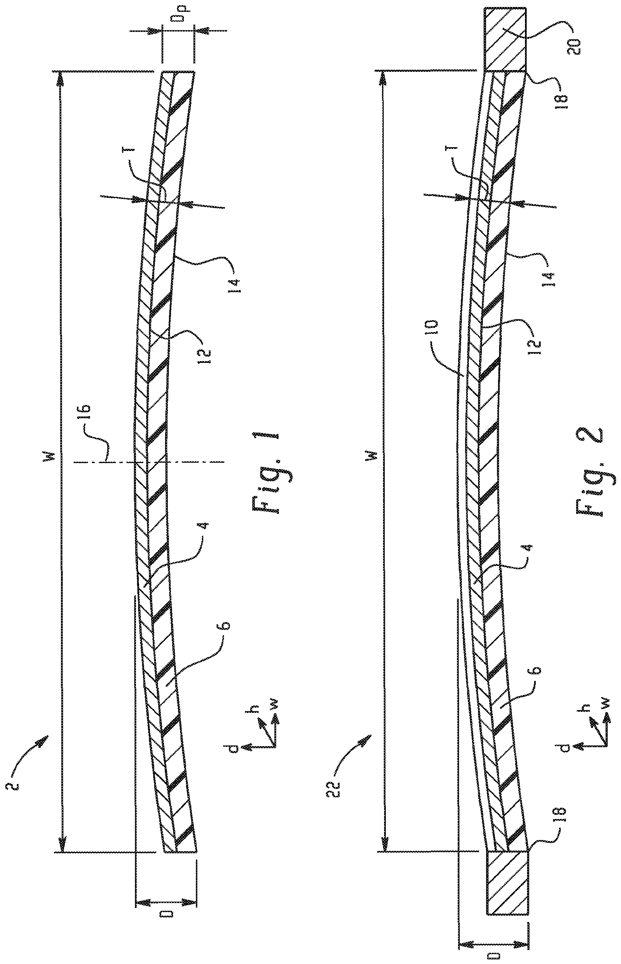

FIG. 1 is an illustration of a cross-section of a viewing panel 2. The viewing panel 2 can include a substrate 6 and a conductive coating 4, where the substrate 6 can include an inside surface 14 and an outside surface 12. The conductive coating 4 can be adjacent to the outside surface 12 of the substrate 6. A conductive coating can be adjacent to the inside surface 14 of the substrate 6. The conductive coating 4 can be applied directly to the surfaces 12, 14 of the substrate 6. The viewing panel 2 can be curved in at least one dimension, e.g., the w-axis dimension. The viewing panel 2 can be curved in two dimensions, e.g., the w-axis and h-axis dimensions. The viewing panel 2 can have a width, W, measured along a w-axis. The viewing panel 2 can have a depth, D, measured along a d-axis. The depth, D, can be larger than the total thickness, T, of the viewing panel. The depth of the viewing panel at a centroid 16 can be larger than a depth, $D_p$, at a point along the perimeter of the viewing panel 2. The depth, D, can be larger than twice the total thickness, T, of the viewing panel 2. The depth, D, of the viewing panel 2 can be maximum at the centroid 16. The viewing panel 2 can have a maximum depth that is not coincident with the centroid 16. The conductive coating 4 can be dispersed across a portion of the width, W, of the substrate 6. The conductive coating 4 can be dispersed across the entire width, W, of the substrate 6. The conductive coating 4 can be dispersed across a portion of the height, H, of the substrate 6. The conductive coating 4 can be dispersed across the entire height, H, of the substrate 6. The conductive coating 4 can be dispersed across a portion of the outside surface 12 of the substrate 6. The conductive coating 4 can be dispersed across the entire outside surface 12 of the substrate 6.

FIG. 2 is an illustration of a cross-section of a viewing panel 22. The viewing panel can include a substrate 6, a conductive coating 4, and a protective material 10, where the substrate 6 can include an inside surface 14 and an outside surface 12. The viewing panel 22 can be disposed adjacent to a conductive frame 20. A conductive frame 20 can abut a perimeter edge 18 of the viewing panel 22. A conductive frame 20 can extend along a portion of the perimeter of the viewing panel 22. A conductive frame 20 can extend along the entire perimeter of the viewing panel 2 such that it can surround the viewing panel 2. A conductive frame 20 can extend along a portion of the surfaces 12, 14 of the viewing panel 2. The conductive frame 20 can be in electrical communication with the conductive coating 4. The protective material 10 can be disposed adjacent to a surface 12, 14 of the substrate 6. The protective material 10 can provide an underlying layer with resistance to abrasion, ultraviolet radiation, microbes, bacteria, corrosion, or a combination comprising at least one of the foregoing.

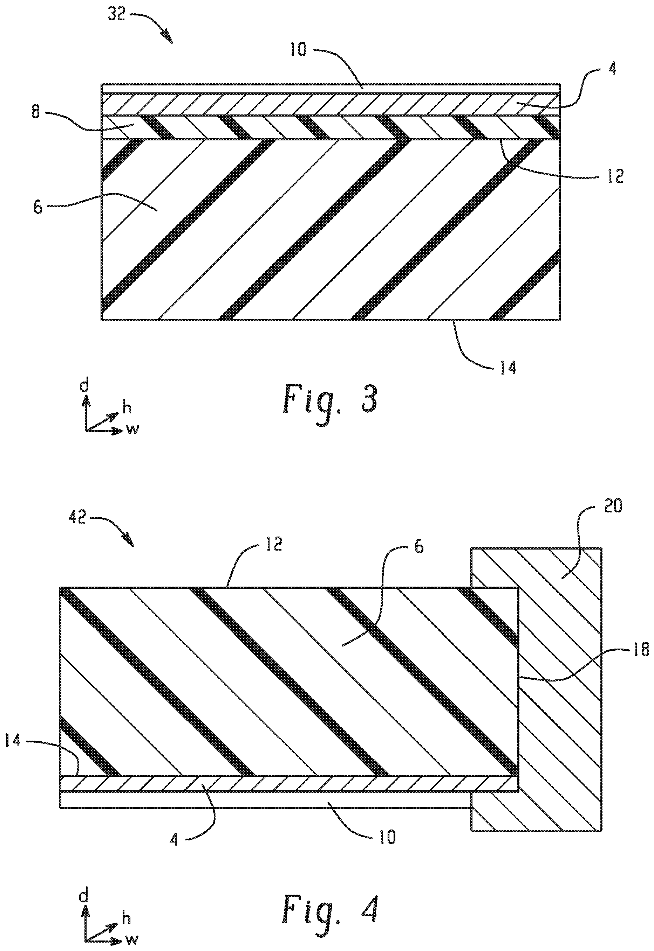

FIG. 3 is an illustration of a cross-section of a portion of a viewing panel 32. The viewing panel 2 can include a film 8 with a conductive coating 4 disposed adjacent to a surface of the film 8, a substrate 6, and a protective material 10. The conductive coating 4 can be disposed on a surface of the film 8 disposed adjacent to the outside surface 12 of the substrate 6. The conductive coating 4 can be disposed on a surface of the film 8 opposite the surface disposed adjacent to the outside surface 12 of the substrate 6. The substrate 6 can be injection molded onto the film 8, such as by a film insert molding or similar processes. The conductive coating 4 can be applied to the film 8 and the film 8 layered onto a surface 12, 14 of the substrate 6. The substrate 6 and film 8, having a conductive coating 4, can be formed into a viewing panel 2 by a thermoforming, vacuum forming, or similar process. The protective material 10 can be applied to a surface of the viewing panel 2. A protective material 10 can be a wet coating. The protective material 10 can be applied using any suitable wet coating technique, e.g., roller coating, screen printing, spreading, spray coating, spin coating, dipping, and the like. A protective material 10 can be a film, or can be applied to a film, which can be adhered to a side of a viewing panel 2. A protective material 10 can be glass. An adhesion promoter can be incorporated into a film having a protective material 10 to improve adherence to a surface of the viewing panel 2.

FIG. 4 is an illustration of a cross-section of a portion of a viewing panel 42. The viewing panel 42 can include a substrate 6 including an outside surface 12 and an inside surface 14 and a conductive coating 4 adjacent to a surface of the substrate. The conductive coating 4 can be applied directly to a surface 12, 14 of the substrate 6. The viewing panel 2 can abut a conductive frame 20. A conductive frame 20 can be in electrical communication with a conductive coating 4. The conductive frame 20 can extend along a portion of an outside surface 12 of the substrate 6 of the viewing panel 42. The conductive frame 20 can extend along a portion of an inside surface 14 of the substrate 6 of the viewing panel 42. The conductive frame 20 can abut a perimeter edge 18 of the viewing panel 42. The conductive frame 20 can extend along the entire perimeter edge 18 of the viewing panel 42 such that it can surround the viewing panel 42 (e.g., can extend along the entire perimeter edge 18 of the viewing panel 42 and can extend along a portion of the substrate and/or a portion of the conductive coating 4). A protective material 10 can be disposed adjacent to a surface 12, 14 of the substrate 6. A protective material 10 can be disposed on a surface 12, 14 of the substrate 6. A protective material 10 can be disposed adjacent to a conductive coating 4. A protective material 10 can be disposed along a portion of a surface of a conductive coating 4. The viewing panel 42 can be coupled to a conductive frame 20 using any mechanical or chemical attachment that can provide electrical connectivity between the conductive coating 4 and conductive frame 20 (e.g., electrically conductive adhesive, fastener, frictional fit). A substrate 6 can be injection molded onto a conductive frame 20 and a conductive coating 4 can be applied to a surface of the viewing panel 42. A conductive frame 20 can abut a conductive coating 4 along at least one dimension, e.g., d-axis dimension. A conductive frame 20 can abut a conductive coating 4 along two dimensions, e.g., d-axis dimension and w-axis dimension. A conductive frame 20 can abut a conductive coating 4 along three dimensions, e.g., d-axis dimension, w-axis dimension, and h-axis dimension.

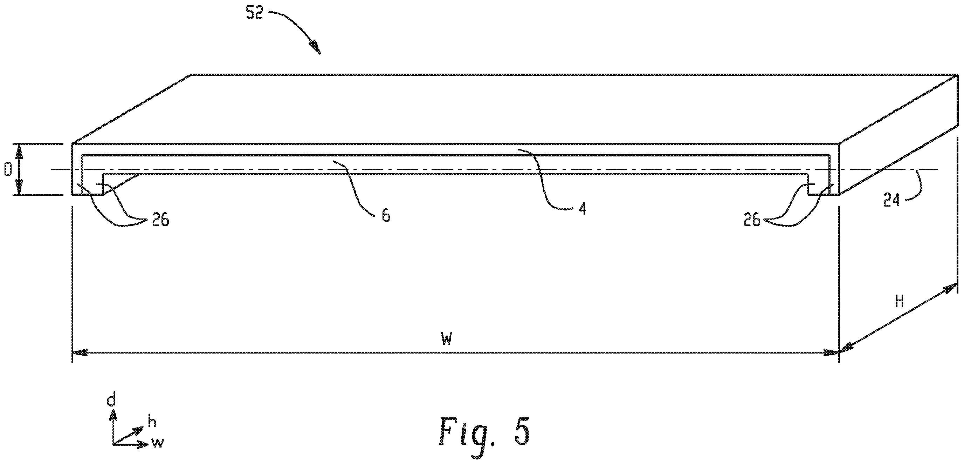

FIG. 5 is an illustration of a cross-section of a viewing panel 52. The viewing panel 52 can have a substrate 6 and conductive coating 4. The viewing panel 52 can have a height, H, measured along an h-axis dimension. The viewing panel 52 can have a width, W, measured along a w-axis dimension. The viewing panel 52 can have a depth, D, measured along a d-axis dimension. The conductive coating 4 can be adjacent to a surface of the substrate 6. The viewing panel 52 can be bent along an edge such that the viewing panel 2 is asymmetric along at least one axis, e.g., asymmetric about a centerline 24. Bent edges 26 on the substrate 6 and conductive coating 4 can provide a larger area for electrical communication between a conductive frame 20 and a conductive coating 4. The conductive coating 4 can be dispersed across a portion of the width, W, of the substrate 6. The conductive coating 4 can be dispersed across the entire width, W, of the substrate 6. The conductive coating 4 can be dispersed across a portion of the height, H, of the substrate 6. The conductive coating 4 can be dispersed across the entire height, H, of the substrate 6.

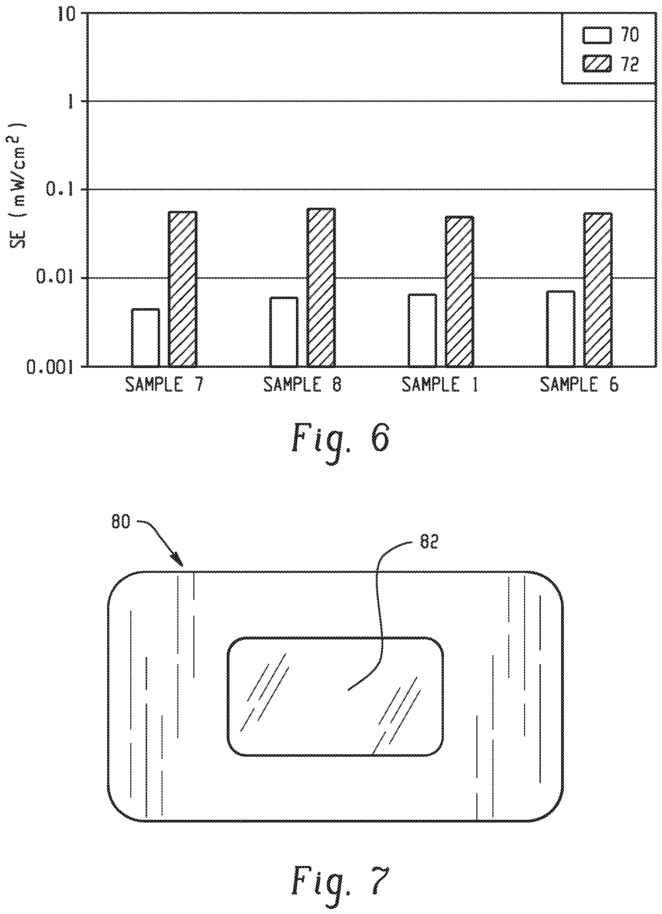

FIG. 7 is an illustration of a microwave oven door 80 with a viewing panel 82 as described herein. It is to be understand that any of the viewing panels 2, 22, 32, 42, 52 as disclosed herein can be used with the microwave oven door 80 of FIG. 7.

The substrate can be formed by any forming process, e.g., a polymer forming process. The substrate can include a transparent material, e.g., glass or a polymeric substrate. For example, a substrate can be formed by an extrusion, calendaring, molding (e.g., injection molding), thermoforming, vacuum forming, or other desirable forming process. The substrate can be made as a flat sheet. The substrate can be formed with curvature. The substrate can be formed such that it is not flat. The substrate can be formed such that it is not coplanar with a plane defined by the height and width dimensions of the substrate. The substrate can be formed with a curved shape such that a depth dimension exceeds a maximum thickness of the substrate (e.g., acknowledging that the thickness of the substrate can vary due to imperfections in manufacturing, such as tool tolerances, variations in process conditions such as temperature, variation in shrinkage during cooling, and the like). The substrate can be curved such that a portion of the substrate has a depth dimension greater than or equal to twice the average thickness of the panel. The substrate can be curved such that the depth of the substrate measured at the centroid of the substrate is greater than the depth of the substrate measured at a point along the perimeter of the substrate. The substrate can be curved such that a depth dimension of the substrate is largest at the centroid of the substrate.

A film having a conductive coating can be layered onto a surface of a substrate to form a viewing panel. A conductive coating can be applied directly to a surface of a substrate to form a viewing panel. In an embodiment, a film including a conductive coating can be placed in a mold and a polymer substrate can be injection molded to a surface of the film to form a viewing panel. In an embodiment, a film, including a conductive coating can be layered onto a substrate (e.g., a polymer substrate) and the film and substrate can be thermoformed into a viewing panel. The film can have additional layers of conductive coatings attached to it. For example, the film can have greater than or equal to 1 conductive coating layer, for example, the film can have greater than or equal to 2 conductive layers, for example, greater than or equal to 3 conductive coating layers, for example, greater than or equal to 5 conductive coating layers, for example, greater than or equal to 10 conductive coating layers, for example, greater than or equal to 15 conductive coating layers.

The perimeter shape of the substrate can be any shape, e.g., circular, elliptical, or the shape of a polygon having straight or curved edges.

A film can be adhered to the substrate formed using a thermoforming, vacuum forming, or similar process. The film can include an adhesion promoter. The film can be adhered to a substrate with an adhesive. The conductive coating can be applied to a substrate or film using any suitable wet coating technique. For example, the conductive coating can be applied using screen printing, spreading, spray coating, spin coating, dipping, and the like. In an embodiment, a substrate can be injection molded into a shape having a depth dimension that exceeds the thickness of the substrate and a conductive coating can be applied to a surface of the substrate. In an embodiment, a conductive coating can be applied to a flat film, the flat film and the substrate can be positioned into a thermoforming tool which can form the film and substrate into a viewing panel having a depth dimension exceeding the total thickness (e.g., combined thickness of the film, coating, and substrate).

The conductive coating can be formed from conductive nanoparticles, including conductive nanoparticles, conductive metal nanowires, carbon allotropes such as carbon nanotubes, graphene, etc., and combinations comprising at least one of the foregoing. Metal nanoparticles can include copper and silver nanoparticles. A metal mesh film can be used having a regular network. Transmittance can be about 70 to about 80% and resistance, measured in Ohm/square can be less than 0.5. Conductive coatings can be formed from conductive metal nanoparticles formed into a patterned network of conductive traces and transparent cells, i.e., voids having few nanoparticles. The network can be random or regular in shape, the transmittance can be about 70%, and the resistance can be less than 0.05 Ohm/square. The transparent cells can have sizes of less than 1 millimeter (mm), for example, less than 0.5 mm, for example, less than 0.25 mm. Transparent conductive coatings are described, for example, in U.S. Pat. No. 7,601,406.

The conductive coating (e.g., conductive metal nanoparticle layers) can be applied to substrate by several techniques, including, printing of conductive inks (e.g., flexographic, screen printing, inkjet, gravure), coating and patterning of e.g., silver halide emulsions which can be reduced to silver particles, coating of conductive nanowire dispersions, and self-assembly of silver nanoparticle dispersions or emulsions.

The conductive coating can contain an EMI shielding material. The conductive coating can include pure metals such as silver (Ag), nickel (Ni), copper (Cu), or similar shielding metal, metal oxides thereof, combinations comprising at least one of the foregoing, and metal alloys comprising at least one of the foregoing, or metals or metal alloys produced by the Metallurgic Chemical Process (MCP) described in U.S. Pat. No. 5,476,535. Metal particles of the conductive coating can be nanometer sized, e.g., such as where 90% of the particles can have an equivalent spherical diameter of less than 100 nanometers (nm). The metals of the conductive coating can form a network of interconnected metal traces defining openings on the substrate surface to which it is applied. The surface resistance of the conductive coating can be less than or equal to 1.0 ohm per square (ohm/sq). A conductive coating can have an EMI shielding effectiveness from 30 megahertz (MHz) to 1.5 gigahertz (GHz) as determined per ASTM D4935 of greater than 25 decibel (dB), for example, 30 dB to 80 dB, or, 40 dB to 80 dB. The conductive coating can include carbon based particles arranged in a network, e.g., carbon based particle with a metal mesh. The conductive coating including carbon based particles can be arranged in a regular network. The conductive coating including carbon based particles can be arranged in an irregular network. The carbon based particles can include graphene, carbon nanotubes, or a combination comprising at least one of the foregoing.

The substrate can be a glass substrate. The substrate can be a transparent polymer substrate where the transparent polymer substrate can include a thermoplastic resin, a thermoset resin, or a combination comprising at least one of the foregoing. The transparent polymer substrate and a film coupled to the substrate can include the same polymer material or can include different polymer materials.

Possible thermoplastic resins include, but are not limited to, oligomers, polymers, ionomers, dendrimers, copolymers such as graft copolymers, block copolymers (e.g., star block copolymers, random copolymers, and the like) or a combination comprising at least one of the foregoing. Examples of such thermoplastic resins include, but are not limited to, polycarbonates (e.g., blends of polycarbonate (such as, polycarbonate-polybutadiene blends, copolyester polycarbonates)), polystyrenes (e.g., copolymers of polycarbonate and styrene, polyphenylene ether-polystyrene blends), polyimides (e.g., polyetherimides), acrylonitrile-styrene-butadiene (ABS), polyarylates, polyalkylmethacrylates (e.g., polymethylmethacrylates (PMMA)), polyesters (e.g., copolyesters, polythioesters), polyolefins (e.g., polypropylenes (PP) and polyethylenes, high density polyethylenes (HDPE), low density polyethylenes (LDPE), linear low density polyethylenes (LLDPE)), polyamides (e.g., polyamideimides), polyarylates, polysulfones (e.g., polyarylsulfones, polysulfonamides), polyphenylene sulfides, polytetrafluoroethylenes, polyethers (e.g., polyether ketones (PEK), polyether etherketones (PEEK), polyethersulfones (PES)), polyacrylics, polyacetals, polybenzoxazoles (e.g., polybenzothiazinophenothiazines, polybenzothiazoles), polyoxadiazoles, polypyrazinoquinoxalines, polypyromellitimides, polyquinoxalines, polybenzimidazoles, polyoxindoles, polyoxoisoindolines (e.g., polydioxoisoindolines), polytriazines, polypyridazines, polypiperazines, polypyridines, polypiperidines, polytriazoles, polypyrazoles, polypyrrolidones, polycarboranes, polyoxabicyclononanes, polydibenzofurans, polyphthalamide, polyacetals, polyanhydrides, polyvinyls (e.g., polyvinyl ethers, polyvinyl thioethers, polyvinyl alcohols, polyvinyl ketones, polyvinyl halides, polyvinyl nitriles, polyvinyl esters, polyvinylchlorides), polysulfonates, polysulfides, polyureas, polyphosphazenes, polysilazanes, polysiloxanes, fluoropolymers (e.g., polyvinyl fluoride (PVF), polyvinylidene fluoride (PVDF), polyvinyl fluoride (PVF), fluorinated ethylene-propylene (FEP), polyethylene tetrafluoroethylene (ETFE)) or a combination comprising at least one of the foregoing.

More particularly, a thermoplastic resin can include, but is not limited to, polycarbonate resins (e.g., Lexan™ resins, commercially available from SABIC's Innovative Plastics business), polyphenylene ether-polystyrene resins (e.g., Noryl™ resins, commercially available from SABIC's Innovative Plastics business), polyetherimide resins (e.g., Ultem™ resins, commercially available from SABIC's Innovative Plastics business), polybutylene terephthalate-polycarbonate resins (e.g., Xenoy™ resins, commercially available from SABIC's Innovative Plastics business), copolyestercarbonate resins (e.g., Lexan™ SLX resins, commercially available from SABIC's Innovative Plastics business), or a combination comprising at least one of the foregoing resins. Even more particularly, the thermoplastic resins can include, but are not limited to, homopolymers and copolymers of a polycarbonate, a polyester, a polyacrylate, a polyamide, a polyetherimide, a polyphenylene ether, or a combination comprising at least one of the foregoing resins. The polycarbonate can comprise copolymers of polycarbonate (e.g., polycarbonate-polysiloxane, such as polycarbonate-polysiloxane block copolymer), linear polycarbonate, branched polycarbonate, end-capped polycarbonate (e.g., nitrile end-capped polycarbonate), or a combination comprising at least one of the foregoing, for example, a combination of branched and linear polycarbonate.

The transparent polymer substrate and/or film of the viewing panel can include various additives ordinarily incorporated into polymer compositions of this type, with the proviso that the additive(s) are selected so as to not significantly adversely affect the desired properties of the polymer, in particular, transparency, deflection, stress, and flexural stiffness. Such additives can be mixed at a suitable time during the mixing of the components for forming the substrate and/or film. Exemplary additives include impact modifiers, fillers, reinforcing agents, antioxidants, heat stabilizers, light stabilizers, ultraviolet (UV) light stabilizers, plasticizers, lubricants, mold release agents, antistatic agents, colorants (such as carbon black and organic dyes), surface effect additives, radiation stabilizers (e.g., infrared absorbing), flame retardants, and anti-drip agents. A combination of additives can be used, for example, a combination of a heat stabilizer, mold release agent, and ultraviolet light stabilizer. The total amount of additives (other than any impact modifier, filler, or reinforcing agents) can be 0.001 weight percent (wt%) to 5 wt%, based on the total weight of the composition of the substrate and/or film.

The substrate can be pretreated to alter the surface energy or to enhance adhesion of the conductive coating using physical or chemical techniques such as ultraviolet (UV), corona, plasma, or chemical primers.

The conductive coating (e.g., transparent, conductive coating) can be plated with an additional conductive metal layer to decrease electrical resistance. Plating techniques can include electroless and electroplating with conductive metals such as silver and copper. Plating techniques are described in U.S. Patent No. 8,105,472 and U.S. Patent Publication No. 2011/0003141.

When the transparent, conductive coating is included in the window assembly of a microwave oven, the coating can be placed on the outside or inside of the window. When the transparent, conductive coating is included in the window assembly of a microwave oven, the coating can be placed as a layer within a multilayer window, such as being sandwiched between two or more transparent substrates providing protection for the conductive network. Single layers of the transparent, conductive coating can be used, or multiple layers can be used, optionally with a space located therebetween. The transparent, conductive coating can cover the entire transparent portion of the window (e.g., 100%). The transparent, conductive coating can cover a portion (e.g., greater than or equal to 50%) of the window. The transparent, conductive coating can be grounded to the metallic door frame or chassis of the microwave oven. The electrical connection between the coating and metallic frame can be accomplished by various techniques, including, but not limited to conductive inks or pastes, conductive tape such as copper tape, soldered connections, or conductive adhesives. One end of the connection can be attached to the metallic door frame or chassis of the microwave oven, while the other end of the connection can be attached to the transparent, conductive coating. The electrical attachment to the coating can be done at multiple locations or even continuously around the perimeters to provide sufficient connection to all parts of the conductive network.

The viewing panel can transmit greater than or equal to 50% (e.g., 50 percent transmittance) of incident EMI having a frequency of 430 THz to 790 THz, for example, 60% to 100%, or, 70% to 100%. A transparent polymer, substrate, film, and/or material of the viewing panel can transmit greater than or equal to 50% of incident EMI having a frequency of 430 THz to 790 THz, for example, 75% to 100%, or, 90% to 100%. Percent transmittance for laboratory scale samples can be determined using ASTM D1003, procedure B using CIE standard illuminant C. ASTM D-1003 (Procedure B, Spectrophotometer, using illuminant C with diffuse illumination with unidirectional viewing) defines percent transmittance as:

$$\%T = \left(\frac{I}{I_O}\right) x 100\%$$

[1]

wherein:

I =    intensity of the light passing through the test sample
$I_o$ =    Intensity of incident light.

A conductive frame can be disposed around the viewing panel in electrical communication with the conductive coating. A viewing panel having a conductive coating in electrical communication with a conductive frame can have an EMI shielding effectiveness from 2.2 GHz to 2.6 GHz for both vertical polarized and horizontal polarized waves as determined per a relevant standard (e.g., international standards such as CISPR 11, CISPR 19, CISPR 13, and the like, or national standards such as FCC part 18, EN55011, or similar national or international standard) of greater than or equal to 30 decibels relative to one microvolt (dB$\mu$V), for example, 30 dB$\mu$V to 75 dB$\mu$V, or, 35 dB$\mu$V to 75 dB$\mu$V.

The following example are merely illustrative of the methods of forming a viewing panel and viewing panel disclosed herein and are not intended to limit the scope hereof.

EXAMPLES

Example 1: Thermoforming Sample Trial

In this example, a sheet thermoforming tool was constructed with 6 dome shaped samples having varying bend radii of 2% (Sample 1), 4% (Sample 2), 6% (Sample 3), 8% (Sample 4), 10% (Sample 5), and 12% (Sample 6). The thermoforming tool used was a GEISS™ AG U8 machine. In the thermoforming process, a film sample is headed from above and below the surface by a top and bottom oven, temperature sensors monitor the top and bottom surface temperatures of the film, the thermoforming tool is activated by a bottom sensor, when the bottom film temperature reaches a set point (e.g., the processing temperature), the bottom oven retracts, and the tool raises into the film, pulling the vacuum, and forming the film sample under the top oven. Stated simply, during thermoforming, a tool is placed in a machined and adjusted to line up with the machine opening, a sample (e.g., unformed sheet) is placed between the aperture plate and o-ring opening, the sample is secured by a clamp frame, the film is heated to the desired temperature, and the tool rails into the sample, vacuum is pulled, and the sample is formed to the tool shape. During the samples, the machine was operated at 100% heating intensity. Processing time varied for each sample and was output by the machine when the film sample reached the set temperature.

For the thermoformed samples, polyethylene terephthalate (PET) was used as the substrate material and the conductive coating used was a conductive film, having a surface resistance of less than or equal to 0.005 Ohms per square, a transmittance of greater than or equal to 70%, and a haze value of less than or equal to 3.5%. The substrate had a thickness of 0.125 mm and the conductive coating had a thickness of 14 micrometers ($\mu$m).

Example 2: EMI Shielding Test

In this example, Samples 1 and 6 were tested and compared to Sample 7, having a metal substrate and the same conductive film as described in Example 1 and Sample 8, a flat sample, (i.e., no bending) having a polyethylene terephthalate substrate and the same conductive film as described in Example 1. The substrate in each sample was 0.125 mm thick, while the conductive coating was 14 $\mu$m thick. Each of the samples were attached to a microwave oven door forming a viewing panel. The microwave oven used in the example was manufactured by SHARP, Model # RE-TE-W5 with an outer size of 400 mm by 365 mm by 275 mm and an inner size of 300 mm by 335 mm by 200 mm, a weight of 12 kilograms (kg), a frequency of 2.45 Gigahertz (GHz) (wavelength and 12.2 centimeters (cm)). Power for this microwave oven was 500 Watts.

Microwave radiation emission tests (i.e., power density tests) were conducted on each sample according to UL 923 for microwave cooking appliances, where prior to conducting any of the tests, the radiation emission should measure less than 1 milliWatt per square centimeter (mW/cm$^2$) at a location of greater than or equal to 5 cm from the microwave oven door and during the test, the microwave radiation emitted should be less than 5 mW/cm$^2$ at a location of greater than or equal to 5 cm from the microwave oven door. Cavity load is 275 $\pm$15 milliliters (mL) of tap water at room temperature (e.g., 20 $\pm$5 °C) in a 600 mL beaker with an inside diameter of about 8.5 cm. Microwave radiation emission is measured with the door fully closed (closed test) and with it opened to a position that enables the generation of microwave energy into the cavity (opened test).

For the test, the loading force for the opened test was 1.5 times the force necessary to open and for the closed test was 2.0 times the force necessary to close. To measure the radiation emission, a probe was set in front of a center position of a microwave oven door in the center portion of a viewing panel. The radiation emission was measured at 50 mm for 20 seconds, then the door was opened 10 mm and the test was conducted again.

Figure 6 illustrates the results from these tests. Samples 1, 6, 7, and 8 were tested and measured for the closed test 70 and the open test 72. As can be seen in Figure 6, the radiation emission (power density) was measured in mW/cm$^2$ and the values were not decreased for Samples 1 and 6, meaning that the transparent articles disclosed herein can provide sufficient EMI shielding compared to metal doors and compared to flat substrates. Values were consistent among all samples, indicating that the transparent articles disclosed herein can find value in microwave oven door applications where the transparent articles can offer increased visible light transmittance, sufficient microwave shielding capability to meet relevant national and industry standards for microwave emission, is capable of reducing the weight and cost of the panel, and can provide greater design freedom allowing for improved aesthetics and curved designs.

Unless otherwise specified herein, any reference to standards, regulations, testing methods and the like, such as ASTM D1003, ASTM D4935, ASTM 1746, FCC part 18, CISPR11, and CISPR 19 refer to the standard, regulation, guidance or method that is in force at the time of filing of the present application.

The transparent articles including electromagnetic interference shielding include at least the following embodiments:

Embodiment 1: A method of forming a viewing panel for a microwave oven comprising: placing a film including a conductive coating into a mold and molding a substrate to a surface of the film having the conductive coating to form the viewing panel; or injection molding a substrate and applying a conductive coating to a surface of the substrate after molding to form the viewing panel; wherein the substrate is selected from a transparent polymer or glass; the conductive coating has an EMI shielding effectiveness of greater than 25 dB from 30 MHz to 3.0 GHz as determined by ASTM D4935; and the viewing panel has a transmittance of greater than or equal to 50% of incident light having a frequency of 430 THz to 790 THz.

Embodiment 2: A method of forming a viewing panel for a microwave oven comprising: coupling a film including a conductive coating to a substrate to form a panel preform; and thermoforming or vacuum forming the panel preform to form the viewing panel; wherein the substrate is selected from a transparent polymer or glass; the coating has a surface resistance of less than or equal to 1.0 ohm/sq; and the viewing panel has a transmittance of greater than or equal to 50% of incident light having a frequency of 430 THz to 790 THz.

Embodiment 3: The method of Embodiment 1, wherein the coating has a surface resistance of less than or equal to 1.0 ohm/sq.

Embodiment 4: The method of Embodiment 2, wherein the coating has an EMI shielding effectiveness of greater than 25 dB from 30 MHz to 3.0 GHz as determined by ASTM D4935.

Embodiment 5: The method of any of Embodiments 1 - 4, comprising joining a frame of conductive material to the viewing panel.

Embodiment 6: The method of Embodiment 1 or Embodiment 3, comprising introducing a frame of conductive material to the mold, and molding the substrate to the frame.

Embodiment 7: The method of any of Embodiments 2, 4, or 5, comprising introducing a frame of conductive material to a thermoforming tool or a vacuum forming tool, and thermoforming or vacuum forming the panel preform to the frame.

Embodiment 8: The method of any of Embodiments 1 - 7, comprising applying a protective material to the conductive coating, wherein the protective material is selected from a wet coating, a protective film, or glass.

Embodiment 9: The method of any of Embodiments 1 - 8, comprising trimming the panel.

Embodiment 10: The method of any of Embodiments 1 - 9, wherein the viewing panel is shaped such that it is not coplanar with a plane defined by a height dimension and a width dimension.

Embodiment 11: The method of any of Embodiments 1 - 9, wherein the viewing panel has a curved shape such that a depth dimension exceeds a maximum thickness of the panel.

Embodiment 12: The method of any of Embodiments 1 - 10, wherein a portion of the viewing panel has a depth dimension greater than or equal to twice an average thickness of the panel.

Embodiment 13: The method of any of Embodiments 1 - 11, wherein a center depth of the panel, measured at the center of the panel, is greater than an edge depth, measured at a perimeter of the panel.

Embodiment 14: The method of any of Embodiments 1 - 12, wherein a depth dimension of the viewing panel is largest at a centroid of the viewing panel.

Embodiment 15: A viewing panel for a microwave oven comprising: a substrate comprising a transparent polymer or glass; a conductive coating adjacent to a surface of the substrate; wherein the coating includes conductive nanoparticles selected from conductive nanoparticles, conductive metal nanowire, carbon allotropes, or a combination comprising at least one of the foregoing, wherein the conductive nanoparticles are arranged in a network; the viewing panel has a transmittance of greater than or equal to 50% of incident light having a frequency of 430 THz to 790 THz; and the viewing panel has an EMI shielding effectiveness of greater than 25 dB from 30 MHz to 3.0 GHz as determined by ASTM D4935.

Embodiment 16: The viewing panel of Embodiment 15, wherein the coating has a surface resistance of less than or equal to 1.0ohm/sq.

Embodiment 17: The viewing panel of Embodiment 15 or Embodiment 16, wherein the conductive coating is directly coupled to the substrate.

Embodiment 18: The viewing panel of Embodiment 15 or Embodiment 16, wherein the conductive coating is adhered to a film and the film is coupled to the substrate.

Embodiment 19: The viewing panel of any of Embodiments 15 -18, comprising a protective material adjacent the conductive coating, wherein the protective material is selected from a wet coating, a protective film, or glass.

Embodiment 20: The method of any of Embodiments 15 - 19, wherein the viewing panel is shaped such that it is not coplanar with a plane defined by a height dimension and a width dimension.

Embodiment 21: The viewing panel of any of Embodiments 15 - 20, wherein the viewing panel has a curved shape such that a depth dimension exceeds a maximum thickness of the panel.

Embodiment 22: The viewing panel of any of Embodiments 15 - 21, wherein a portion of the viewing panel has a depth dimension greater than or equal to twice an average thickness of the panel.

Embodiment 23: The viewing panel of any of Embodiments 15 - 22, wherein a center depth of the panel, measured at the center of the panel, is greater than an edge depth, measured at a perimeter of the panel.

Embodiment 24: The viewing panel of any of Embodiments 15 - 23, wherein a depth dimension of the viewing panel is largest at a centroid of the viewing panel.

Embodiment 25: A microwave oven door comprising: the viewing panel of any of Embodiments 1 - 24.

In general, the invention may alternately comprise, consist of, or consist essentially of, any appropriate components herein disclosed. The invention may additionally, or alternatively, be formulated so as to be devoid, or substantially free, of any components, materials, ingredients, adjuvants or species used in the prior art compositions or that are otherwise not necessary to the achievement of the function and/or objectives of the present invention.

All ranges disclosed herein are inclusive of the endpoints, and the endpoints are independently combinable with each other (e.g., ranges of "up to 25 wt%, or, more specifically, 5 wt% to 20 wt%", is inclusive of the endpoints and all intermediate values of the ranges of "5 wt% to 25 wt%," etc.). "Combination" is inclusive of blends, mixtures, alloys, reaction products, and the like. Furthermore, the terms "first," "second," and the like, herein do not denote any order, quantity, or importance, but rather are used to denote one element from another. The terms "a" and "an" and "the" herein do not denote a limitation of quantity, and are to be construed to cover both the singular and the plural, unless otherwise indicated herein or clearly contradicted by context. The suffix "(s)" as used herein is intended to include both the singular and the plural of the term that it modifies, thereby including one or more of that term (e.g., the film(s) includes one or more films). Reference throughout the specification to "one embodiment", "another embodiment", "an embodiment", and so forth, means that a particular element (e.g., feature, structure, and/or characteristic) described in connection with the embodiment is included in at least one embodiment described herein, and may or may not be present in other embodiments. In addition, it is to be understood that the described elements may be combined in any suitable manner in the various embodiments.

## Claims

1. A method of forming a viewing panel for a microwave oven comprising:

placing a film including a conductive coating into a mold and molding a substrate to a surface of the film having the conductive coating to form the viewing panel; or
injection molding a substrate and applying a conductive coating to a surface of the substrate after molding to form the viewing panel;
wherein

the substrate is selected from a transparent polymer or glass;

the conductive coating has an EMI shielding effectiveness of greater than 25 dB from 30 MHz to 3.0 GHz as determined by ASTM D4935; and
the viewing panel has a transmittance of greater than or equal to 50% of incident light having a frequency of 430 THz to 790 THz;

wherein the conductive coating is adhered to a film and the film is coupled to the substrate.

2. A method of forming a viewing panel for a microwave oven comprising:

coupling a film including a conductive coating to a substrate to form a panel preform; and
thermoforming or vacuum forming the panel preform to form the viewing panel;
wherein

the substrate is selected from a transparent polymer or glass;
the coating has a surface resistance of less than or equal to 1.0 ohm/sq; and
the viewing panel has a transmittance of greater than or equal to 50% of incident light having a frequency of 430 THz to 790 THz;

wherein the conductive coating is adhered to a film and the film is coupled to the substrate.

3. The method of any of Claims 1 - 2, comprising joining a frame of conductive material to the viewing panel.

4. The method of Claim 1, comprising introducing a frame of conductive material to the mold, and molding the substrate to the frame.

5. The method of any of Claims 2, or 3, comprising introducing a frame of conductive material to a thermoforming tool or a vacuum forming tool, and thermoforming or vacuum forming the panel preform to the frame.

6. The method of any of Claims 1 - 5, comprising applying a protective material to the conductive coating, wherein the protective material is selected from a wet coating, a protective film, or glass.

7. The method of any of Claims 1 - 6, comprising trimming the panel.

8. The method of any of Claims 1 - 7, wherein the viewing panel is shaped such that it is not coplanar with a plane defined by a height dimension and a width dimension.

9. The method of any of Claims 1 - 8, wherein the viewing panel has a curved shape such that a depth dimension exceeds a maximum thickness of the panel, wherein a portion of the viewing panel has a depth dimension greater than or equal to twice an average thickness of the panel, wherein a center depth of the panel, measured at the center of the panel, is greater than an edge depth, measured at a perimeter of the panel, and wherein a depth dimension of the viewing panel is largest at a centroid of the viewing panel.

10. A viewing panel for a microwave oven comprising:

a substrate comprising a transparent polymer or glass;
a conductive coating adjacent to a surface of the substrate;
wherein

the coating includes conductive nanoparticles selected from conductive nanoparticles, conductive metal nanowire, carbon allotropes, or a combination comprising at least one of the foregoing, wherein the conductive nanoparticles are arranged in a network;
the viewing panel has a transmittance of greater than or equal to 50% of incident light having a frequency of 430 THz to 790 THz; and
the viewing panel has an EMI shielding effectiveness of greater than 25 dB from 30 MHz to 3.0 GHz as determined by ASTM D4935;

wherein the conductive coating is adhered to a film and the film is coupled to the substrate.

11. The viewing panel of -Claim 10, wherein the viewing panel is shaped such that it is not coplanar with a plane defined by a height dimension and a width dimension.

12. The viewing panel of any of Claims 10 -11, wherein the viewing panel has a curved shape such that a depth dimension exceeds a maximum thickness of the panel.

13. The viewing panel of any of Claims 10 - 12, wherein a portion of the viewing panel has a depth dimension greater than or equal to twice an average thickness of the panel.

14. The viewing panel of any of Claims 10-13, wherein a center depth of the panel, measured at the center of the panel, is greater than an edge depth, measured at a perimeter of the panel and wherein a depth dimension of the viewing panel is largest at a centroid of the viewing panel.

15. A microwave oven door comprising:
the viewing panel of any of Claims 10 - 14.


**Patentansprüche**

1. Verfahren zum Herstellen einer Sichtscheibe für einen Mikrowellenofen, umfassend:

Platzieren eines Films, welcher eine leitfähige Beschichtung aufweist, in eine Form und Formen eines Substrats an eine Oberfläche des Films, welcher die leitfähige Beschichtung aufweist, um die Sichtscheibe zu bilden; oder Spritzgießen eines Substrats und Aufbringen einer leitfähigen Beschichtung an eine Oberfläche des Substrats nach dem Spritzgießen, um die Sichtscheibe herzustellen;
wobei
das Substrat aus einem transparenten Polymer oder Glas ausgewählt wird; die leitende Beschichtung eine EMI-Abschirmwirkung von mehr als 25 dB von 30 MHz bis 3,0 GHz hat, bestimmt gemäß ASTM D4935; und die Sichtscheibe eine Durchlässigkeit von größer als oder gleich 50 % des einfallenden Lichts mit einer Frequenz von 430 THz bis 790 THz hat;
wobei die leitende Beschichtung an einen Film befestigt wird und der Film an das Substrat gekoppelt wird.

2. Verfahren zum Herstellen einer Sichtscheibe für einen Mikrowellenofen, umfassend:

Koppeln eines Films, welcher eine leitende Beschichtung aufweist, an ein Substrat, um eine Scheibenvorform herzustellen; und
Thermoformen oder Vakuumformen der Scheibenvorform zum Herstellen der Sichtscheibe;
wobei
das Substrat aus einem transparenten Polymer oder Glas ausgewählt wird;
die Beschichtung einen Oberflächenwiderstand von kleiner als oder gleich 1,0 Ohm/sq aufweist; und
die Sichtscheibe eine Durchlässigkeit von größer als oder gleich 50 % des einfallenden Lichts mit einer Frequenz von 430 THz bis 790 THz hat;
wobei die leitende Beschichtung an einen Film befestigt wird und der Film an das Substrat gekoppelt wird.

3. Verfahren nach einem der Ansprüche 1 - 2, umfassend das Verbinden eines Rahmens aus leitfähigem Material mit der Sichtscheibe.

4. Verfahren nach Anspruch 1, umfassend das Einführen eines Rahmens aus leitfähigem Material in die Form und das Formen des Substrats an den Rahmen.

5. Verfahren nach einem der Ansprüche 2 oder 3, umfassend das Einführen eines Rahmens aus leitfähigem Material in ein Thermoformwerkzeug oder ein Vakuumformwerkzeug und das Thermoformen oder Vakuumformen der Scheibenvorform an den Rahmen.

6. Verfahren nach einem der Ansprüche 1 - 5, umfassend das Aufbringen eines Schutzmaterials an die leitende Beschichtung, wobei das Schutzmaterial aus einer Nassbeschichtung, einem Schutzfilm oder Glas ausgewählt wird.

7. Verfahren nach einem der Ansprüche 1 - 6, umfassend das Beschneiden der Scheibe.

**8.** Verfahren nach einem der Ansprüche 1 - 7, wobei die Sichtscheibe geformt wird derart, dass diese nicht koplanar mit einer durch eine Höhenabmessung und eine Breitenabmessung definierten Ebene ist.

**9.** Verfahren nach einem der Ansprüche 1 - 8, wobei die Sichtscheibe eine gekrümmte Form hat derart, dass eine Tiefenabmessung eine maximale Dicke der Scheibe überschreitet, wobei ein Abschnitt der Sichtscheibe eine Tiefenabmessung hat, welche größer als oder gleich dem Doppelten einer durchschnittlichen Dicke der Scheibe ist, wobei eine Mittentiefe der Scheibe, gemessen in der Mitte der Scheibe, größer ist als eine Randtiefe, gemessen an einem Rand der Scheibe, und wobei eine Tiefenabmessung der Sichtscheibe in einem Mittelpunkt der Sichtscheibe am größten ist.

**10.** Sichtscheibe für einen Mikrowellenofen, umfassend:

ein Substrat, welches ein transparentes Polymer oder Glas umfasst;
eine an eine Oberfläche des Substrats angrenzende leitende Beschichtung;
wobei
die Beschichtung leitfähige Nanopartikel enthält, welche ausgewählt sind aus leitfähigen Nanopartikeln, leitfähigem Metallnanodraht, Kohlenstoff-Allotropen oder einer Kombination, welche mindestens eines der vorgenannten umfasst, wobei die leitfähigen Nanopartikel in einem Netzwerk angeordnet sind;
die Sichtscheibe eine Durchlässigkeit von größer als oder gleich 50 % des einfallenden Lichts mit einer Frequenz von 430 THz bis 790 THz hat; und
das Sichtfenster eine EMI-Abschirmwirkung von mehr als 25 dB von 30 MHz bis 3,0 GHz hat, bestimmt gemäß ASTM D4935;
wobei die leitende Beschichtung an einen Film befestigt und der Film an das Substrat gekoppelt ist.

**11.** Sichtscheibe nach Anspruch 10, wobei die Sichtscheibe geformt ist derart, dass diese nicht koplanar mit einer durch eine Höhenabmessung und eine Breitenabmessung definierten Ebene ist.

**12.** Sichtscheibe nach einem der Ansprüche 10 - 11, wobei die Sichtscheibe eine gekrümmte Form hat derart, dass eine Tiefenabmessung eine maximale Dicke der Scheibe überschreitet.

**13.** Sichtscheibe nach einem der Ansprüche 10 - 12, wobei ein Abschnitt der Sichtscheibe eine Tiefenabmessung hat, welche größer als oder gleich dem Doppelten einer durchschnittlichen Dicke der Scheibe ist.

**14.** Sichtscheibe nach einem der Ansprüche 10 - 13, wobei eine Mittentiefe der Scheibe, gemessen in der Mitte der Scheibe, größer ist als eine Randtiefe, gemessen an einem Rand der Scheibe, und wobei eine Tiefenabmessung der Sichtscheibe in einem Mittelpunkt der Sichtscheibe am größten ist.

**15.** Eine Mikrowellenofentür, umfassend:
die Sichtscheibe gemäß einem der Ansprüche 10 - 14.

**Revendications**

**1.** Procédé de formation d'un panneau de visualisation pour un four à micro-ondes comprenant les étapes consistant à :

mettre en place dans un moule un film comprenant un revêtement conducteur et mouler un substrat sur une surface du film ayant le revêtement conducteur pour former le panneau de visualisation ; ou
mouler par injection un substrat et appliquer un revêtement conducteur sur une surface du substrat après moulage pour former le panneau de visualisation ;
où

le substrat est choisi parmi un polymère transparent ou du verre ;
le revêtement conducteur a une efficacité d'écran EMI supérieure à 25 dB de 30 MHz à 3,0 GHz comme déterminée selon la norme ASTM D4935 ; et
le panneau de visualisation a une transmittance supérieure ou égale à 50% de la lumière incidente ayant une fréquence comprise entre 430 THz et 790 THz ;

le revêtement conducteur étant collé à un film et le film est couplé au substrat.

2. Procédé de formation d'un panneau de visualisation pour un four à micro-ondes comprenant les étapes consistant à :

coupler un film comprenant un revêtement conducteur à un substrat pour former une préforme de panneau ; et thermoformer ou former sous vide la préforme de panneau pour former le panneau de visualisation :
où

le substrat est choisi parmi un polymère ou du verre ;
le revêtement a une résistance de surface inférieure ou égale à 1,0 ohm par carré ; et
le panneau de visualisation a une transmittance supérieure ou égale à 50 % de la lumière incidente ayant une fréquence comprise entre 430 THz et 790 THz ;

le revêtement conducteur étant collé à un film et le film étant couplé au substrat.

3. Procédé selon l'une des revendications 1 à 2, comprenant l'étape consistant à assembler un cadre en matériau conducteur au panneau de visualisation.

4. Procédé selon la revendication 1, comprenant les étapes consistant à introduire un cadre en matériau conducteur dans le moule, et à mouler le substrat sur le cadre.

5. Procédé selon l'une des revendications 2 ou 3, comprenant les étapes consistant à introduire un cadre en matériau conducteur dans un outil de thermoformage ou un outil de formage sous vide, et à thermoformer ou à former sous vide la préforme du panneau sur le cadre.

6. Procédé selon l'une des revendications 1 - 5, comprenant l'étape consistant à appliquer un matériau protecteur sur le revêtement conducteur, le matériau protecteur étant choisi parmi un revêtement par voie humide, un film protecteur ou du verre.

7. Procédé de l'une des revendications 1 - 6, comprenant l'étape consistant à ébarber le panneau.

8. Procédé selon l'une des revendications 1 - 7, dans laquelle le panneau de visualisation est formé de sorte à ne pas être coplanaire à un plan défini par une hauteur et une largeur.

9. Procédé selon l'une des revendications 1 - 8, dans lequel le panneau de visualisation a une forme incurvée telle qu'une profondeur dépasse une épaisseur maximale du panneau, une partie du panneau de visualisation ayant une profondeur supérieure ou égale à deux fois une épaisseur moyenne du panneau, une profondeur centrale du panneau, mesurée au centre du panneau, étant supérieure à une profondeur de bord, mesurée à un périmètre du panneau, et une profondeur du panneau de visualisation étant la plus grande à un centroïde du panneau de visualisation.

10. Panneau de visualisation pour un four à micro-ondes comprenant :

un substrat comprenant un polymère transparent ou du verre ;
un revêtement conducteur adjacent à une surface du substrat ;
dans lequel

le revêtement comprend des nanoparticules conductrices choisies parmi des nanoparticules conductrices, des nanofils métalliques conducteurs, des allotropes de carbone, ou une combinaison comprenant au moins l'un des éléments précédents, les nanoparticules conductrices étant disposées en réseau ;
le panneau de visualisation a une transmittance supérieure ou égale à 50% de la lumière incidente ayant une fréquence comprise entre 430 THz et 790 THz ; et
le panneau de visualisation a une efficacité d'écran EMI supérieure à 25 dB de 30 MHz à 3,0 GHz comme déterminée selon la norme ASTM D4935 ;

le revêtement conducteur étant collé à un film et le film étant couplé au substrat.

11. Panneau de visualisation selon la revendication 10, dans lequel le panneau de visualisation est formé de manière à ne pas être coplanaire à un plan défini par une hauteur et une largeur.

**12.** Panneau de visualisation selon l'une des revendications 10 - 11, dans lequel le panneau de visualisation a une forme incurvée telle qu'une profondeur dépasse une épaisseur maximale du panneau.

**13.** Panneau de visualisation selon l'une des revendications 10 - 12, dans lequel une partie du panneau de visualisation a une profondeur supérieure ou égale à deux fois l'épaisseur moyenne du panneau.

**14.** Panneau de visualisation selon l'une des revendications 10 - 13, dans lequel une profondeur centrale du panneau, mesurée au centre du panneau, est supérieure à une profondeur de bord, mesurée à un périmètre du panneau, et dans lequel une profondeur du panneau de visualisation est la plus grande à un centroïde du panneau de visualisation.

**15.** Porte de four à micro-ondes comprenant :
le panneau de visualisation de l'une des revendications 10 - 14.

Fig. 1

Fig. 2

32

10

4

8

6

12

14

d

h

w

*Fig. 3*

42

12

6

20

18

14

4

10

d

h

w

*Fig. 4*

*Fig. 5*

EP 3 122 805 B1

Fig. 6

Fig. 7

**EP 3 122 805 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7601406 B
- US 5476535 A
- US 8105472 B
- US 20110003141 A

**Non-patent literature cited in the description**

- International Special Committee on Radio Interference (CISPR). 21CFR1030.10 revised. Federal Communications Commission (FCC), 01 April 2013